# EUROPEAN PATENT APPLICATION

(11) **EP 3 950 106 A1**
(43) Date of publication of application: **09.02.2022**
(21) Application number: 20782835.1
(22) Date of filing: 27.03.2020
(51) Int. Cl.: B01F 1/00, B01F 3/04, B01F 7/16, B01F 15/02, C01D 15/08, C22B 26/12, C22B 3/04

(54) **PRODUCTION METHOD FOR LITHIUM CARBONATE**

(30) Priority: 29.03.2019 JP 2019069370
(71) Applicant: JX Nippon Mining & Metals Corporation, Tokyo 105-8417 (JP)
(72) Inventor: ARIYOSHI,Hirotaka, Hitachi-shi, Ibaraki 317-0056 (JP); TOMITA,Isao, Hitachi-shi, Ibaraki 317-0056 (JP); ABE,Hiroshi, Hitachi-shi, Ibaraki 317-0056 (JP)
(74) Representative: Arnold & Siedsma
(86) International application number: PCT/JP2020/014320
(87) International publication number: WO 2020/203888

(57) **Abstract**

A method for producing lithium carbonate includes: a dissolution step of dissolving crude lithium carbonate in a liquid while feeding a carbon dioxide gas; a decarbonization step of heating a lithium dissolved solution obtained in the dissolution step to release carbonic acid, wherein the dissolution step comprises storing the liquid mixed with the crude lithium carbonate in a reaction vessel, and agitating the liquid using an agitator, and wherein the agitator includes: a cylindrical body arranged upright in the reaction vessel; a plurality of rotary blades placed at one end side of the cylindrical body, the rotary blades driven to rotate around a rotation axis, and extending in a radial direction; a plurality of fixed blades fixed and arranged at the one end side of the cylinder body on a radially outer side of the rotary blades, each of the fixed blades extending in the radial direction; and a gas feed pipe for feeding a gas toward the rotary blades and the fixed blades.

## Description

### FIELD OF THE INVENTION

This specification discloses an art relating to a method for producing lithium carbonate.

### BACKGROUND OF THE INVENTION

For example, when recovering lithium from wastes such as lithium ion batteries and other electronic devices by a wet process, a lithium-containing solution including lithium ions may be obtained. Such a lithium-containing solution may be subjected to a carbonation step, whereby the lithium contained in the lithium-containing solution may be recovered in the form of lithium carbonate.

As an art relating to this, Patent literature 1 discloses that lithium carbonate is recovered from an aqueous solution containing lithium ions by extracting the lithium ions with solvent extraction, repeating back-extraction, and then mixing the resulting aqueous highly concentrated lithium ion solution with a carbonate.

Further, Patent Literature 2 discloses that lithium is recovered from a solution containing at least lithium and nickel by co-extracting nickel and lithium with solvent extraction and then carbonating the lithium solution obtained by back-extracting only the lithium.

### CITATION LIST

### Patent Literatures

[Patent Literature 1] Japanese Patent Application Publication No. 2006-057142 A
[Patent Literature 2] Japanese Patent Application Publication No. 2011-074410 A

### SUMMARY OF THE INVENTION

### Technical Problem

The lithium carbonate obtained as described above may contain a certain amount of impurities and have relatively low purity. In this case, depending on applications, it may be necessary to remove the impurities from the crude lithium carbonate to provide lithium carbonate having a higher purity.

In the purification of lithium carbonate, the crude lithium carbonate is dissolved in a liquid while feeding a carbon dioxide gas by blowing or other means to obtain a lithium dissolved solution. The lithium dissolved solution is then heated to release a carbonate and crystallize lithium carbonate.

Here, when dissolving the crude lithium carbonate in the liquid, a reaction efficiency of the carbon dioxide gas cannot be sufficiently increased even if the carbon dioxide gas simply passes through the liquid. Therefore, in order to improve the reaction efficiency of the carbon dioxide gas, the solubility of the carbon dioxide gas is generally increased under low temperature and high pressure conditions. However, in order to realize the reaction under the low temperature and high pressure conditions, any equipment would be required to increase initial and running costs.

Alternatively, it is possible to set a lower lithium concentration in the liquid without increasing the solubility of the carbon dioxide gas so much. However, this would increase the cost of concentration during crystallization.

This specification discloses a method for producing lithium carbonate, which can increase a reaction efficiency of a carbon dioxide gas when dissolving crude lithium carbonate.

### Solution to Problem

A method for producing lithium carbonate disclosed in this specification comprises: a dissolution step of dissolving crude lithium carbonate in a liquid while feeding a carbon dioxide gas; a decarbonization step of heating a lithium dissolved solution obtained in the dissolution step to release carbonic acid, wherein the dissolution step comprises storing the liquid mixed with the crude lithium carbonate in a reaction vessel, and agitating the liquid using an agitator, and wherein the agitator comprises: a cylindrical body arranged upright in the reaction vessel; a plurality of rotary blades placed at one end side of the cylindrical body, the rotary blades driven to rotate around a rotation axis, and extending in a radial direction; a plurality of fixed blades fixed and arranged at the one end side of the cylinder body on a radially outer side of the rotary blades, each of the fixed blades extending in the radial direction; and a gas feed pipe for feeding a gas toward the rotary blades and the fixed blades.

### Advantageous Effects of Invention

According to the method for producing lithium carbonate as described above, a reaction efficiency of a carbon dioxide gas when dissolving crude lithium carbonate can be increased.

### BRIEF DESCRIPTION OF THE DRAWINGS

FIG. 1 is a flow chart showing a method for producing lithium carbonate according to an embodiment;
FIG. 2 is a flow chart showing an example of a method for processing lithium ion battery waste including the method for producing lithium carbonate in FIG. 1;
FIG. 3 is a side view showing that an agitator used in the dissolution step is arranged in a reaction vessel in which a liquid is stored;
FIG. 4 is a schematic cross-sectional view taken along an axial direction of the agitator in FIG. 3; and
FIG. 5 is a bottom view showing rotary blades and fixed blades possessed by the agitator in FIG. 3.

### DETAILED DESCRIPTION OF THE INVENTION

Hereinafter, embodiments of the method for producing lithium carbonate will be described in detail.

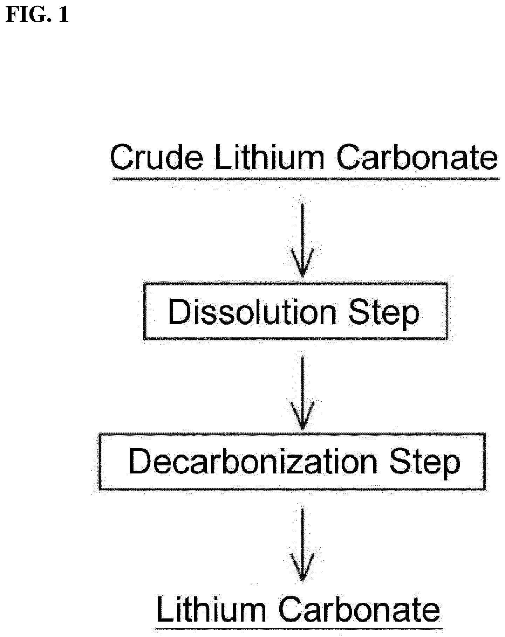

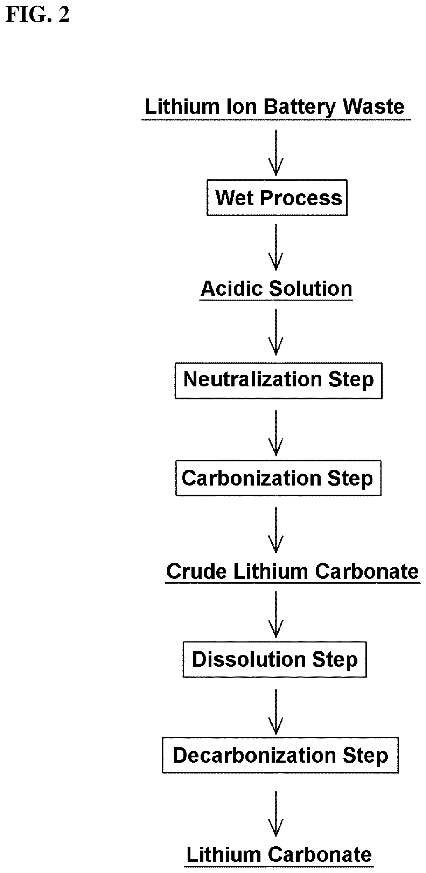

As illustrated in FIG. 1, a method for producing lithium carbonate according to an embodiment includes a dissolution step of dissolving crude lithium carbonate in a liquid while feeding a carbon dioxide gas; a decarbonization step of heating a lithium dissolved solution obtained in the dissolution step to release carbonic acid. This embodiment can be used, for example, in the method for processing lithium ion battery waste as illustrated in FIG. 2. The embodiment illustrated in FIG. 2 includes carrying out a neutralization step and a carbonation step in this order for an acidic solution after subjecting lithium ion battery waste to a predetermined wet process, and further subjecting the resulting crude lithium carbonate to a dissolution step and a decarbonization step in this order.

Here, it is particularly important to use a predetermined agitator to agitate a liquid in a reaction vessel where a liquid mixed with crude lithium carbonate is stored in the dissolution step. The use of the predetermined agitator can allow the reaction efficiency of the carbon dioxide gas to be significantly increased.

### (Lithium Ion Battery Waste)

Lithium ion battery waste is waste of lithium ion batteries that can be used in various machines or devices such as mobile phones and other various electronic devices, as well as motor vehicles. Specific example of waste include waste discarded or recovered due to the life of battery products, manufacturing defects, or other reasons. Such lithium ion battery waste is targeted, whereby effective utilization of resources can be achieved.

The Lithium ion battery waste may contain positive electrode active materials which are lithium metal salts containing Mn, Ni and Co, as well as negative electrode materials containing C (carbon), Fe and Cu, and aluminum foils (positive electrode substrates) having positive electrode active materials applied and attached by, for example, polyvinylidene fluoride (PVDF) or other organic binders, and housings containing aluminum for outer packaging enclosing the lithium ion battery waste. Specifically, the lithium ion battery waste may include a single metal oxide composed of one element and/or a composite metal oxide composed of two or more elements of Li, Ni, Co and Mn forming the positive electrode active materials, as well as Al, Cu, Fe, C and the like.

In this embodiment, the lithium ion battery waste includes battery positive electrode material components containing at least one metal selected from the group consisting of Co, Ni and Mn, and Li, and in some cases it may further contain at least one metal selected from the group consisting of Al, Cu, Fe and C.

The lithium ion battery waste may have been subjected to preprocessing such as, for example, a calcination process of heating the waste in a heating facility at a predetermined temperature and time, a crushing process using a rotor rotating type or impact type crusher after the calcination, and a sieving process of sieving the crushed granular powder through a sieve having predetermined openings. Such preprocessing can result in a form of the lithium ion battery waste in which the binder that binds the aluminum foils to the positive electrode active materials is decomposed, and Al, Cu, and the like are removed, as well as the battery positive electrode material components are easily dissolved by leaching in the wet process.

### (Wet Process)

In the wet process, the lithium ion battery waste as described above is leached with an acid such as sulfuric acid, hydrochloric acid or other mineral acid. Here, a hydrogen peroxide solution may be added in order to facilitate dissolution of the metals contained in the lithium ion battery waste. This can result in a leached solution in which the metals in the lithium ion battery waste are dissolved.

The leached solution is then subjected to neutralization, sulfurization or solvent extraction to remove, for example, Fe, Al, Cu, and the like, and at least one of Co, Ni, and Mn remaining in the solution is then sequentially collected by solvent extraction/back extraction, or the like, under conditions depending on each metal.

### (Acidic Solution)

An acidic solution is obtained by subjecting the above lithium ion battery waste to the wet process, and is a solution in which Li and impurities are dissolved.

An example of such an acidic solution includes a Ni extracted solution obtained after extracting nickel by solvent extraction for recovering nickel among a plurality of steps of solvent extraction or neutralization subjected to the leached solution in the above wet process, and a Ni electrolyzed solution obtained after subjecting the nickel to extraction and back extraction, and further electrolytic winning to recover the nickel.

Specifically, the Ni extracted solution is obtained from lithium ion battery waste by the following step.

The extracted solution is obtained from the lithium-ion battery waste through roasting, crushing, and sieving steps, a leaching step, a neutralization step (removal of Fe and Al), a solvent extraction step 1 (removal of Mn and Al), a solvent extraction step 2 (Co Recovery), and a solvent extraction step 3 (Ni recovery). The Ni electrolyzed solution is obtained after an acidic solution obtained by back-extracting an oil phase (a solvent) of the solvent extraction step 3 (Ni recovery) in the above steps is used for electrolysis.

In addition, the acidic solution that can be used includes a Li leached solution obtained by adding the above lithium ion battery waste to water or the like and mainly leaching the lithium into water or the like. In this case, the wet process means that the lithium in the lithium ion battery waste is leached into water or the like.

The Ni electrolyzed solution has a pH of, for example, -1.0 to 2.0, and preferably 0.0 to 1.0, and the Ni extracted solution as described above has a pH of, for example, 1.0 to 4.0, and preferably 2.0 to 3.0, and the Li leached solution described above has a pH of, for example, 9.0 to 13.0, and preferably 10.0 to 12.0.

The above Ni extracted solution, Ni electrolyzed solution, and Li leached solution can be used after concentrating lithium by solvent extraction, as needed. The concentrating of lithium results in an acidic solution having a pH of about 0.0 to 1.0, for example.

The impurities contained in the acidic solution include, among the components contained in the lithium ion battery waste, those remaining without being separated by the wet process. Specifically, in the embodiment shown in FIG. 1, the acidic solution contains Ni, Na, Ca, Mg and SO₄ as impurities together with Li.

The acidic solution contains Li ions, for example, in a concentration of from 2 g/L to 20 g/L, and typically from 5 g/L to 12 g/L, and Ni ions, for example, in a concentration of from 50 g/L to 150 g/L, and typically from 70 g/L to 100 g/L. In particular, when the acidic solution is the above electrolyzed solution, the Ni ions are often in such a concentration range.

The acidic solution may further contain Na ions, for example, in a concentration of from 30 g/L to 70 g/L, and typically from 40 g/L to 60 g/L, and Ca ions, for example, in a concentration of from 0.001 g/L to 0.100 g/L, and typically from 0.01 g/L to 0.05 g/L, Mg ions, for example, in a concentration of from 0.01 g/L to 10.00 g/L, and typically from 0.05 g/L to 5.00 g/L, and SO₄ ions, for example, in a concentration of from 1 g/L to 200 g/L, and typically from 10 g/L to 100 g/L.

Among them, the Mg ions that can be contained in the acidic solution remains without being removed by the method until lithium carbonate is purified, causing deterioration of quality. Therefore, it is suitable that the Mg ions are removed by a neutralization step as described later as in this embodiment. The Mg ions may be more typically contained in a concentration of from 0.1 g/L to 2.0 g/L, and even from 0.2 g/L to 2.0 g/L.

Examples of ions that can be contained in the acidic solution include Co, Mn, Si, and Cl, although these are not present in the embodiment as shown in FIG. 2.

### (Neutralization Step)

An alkali is added to the acidic solution as described above to neutralize the acidic solution, thereby precipitating the Ni ions and the Mg ions in the acidic solution as solids, which are separated and removed by solid-liquid separation. As a result, the Ni ions and Mg ions are removed to obtain a neutralized solution containing lithium ions.

The alkali used in the neutralization step is not particularly limited as long as it can effectively increase the pH of the acidic solution, and examples thereof include NaOH, Ca(OH)₂, CaO, and CaCO₃. When a Ca salt is used, the SO₄ ions that can be contained in the acidic solution are converted into CaSO₄ with the Ca salt, which can also be removed by solid-liquid separation.

Among the Ca salts, Ca(OH)₂ is particularly preferable in terms of reaction control and prevention of scaling of equipment. In addition, since CaO generates heat during addition, scales are generated inside the equipment, which may reduce an actual volume of the reaction vessel and clog the piping. There is a concern that CaCO₃ cannot increase the pH to a predetermined level.

However, with the Ca salt, an amount of a neutralized material may be increased and a larger filter may be required. Therefore, from this point of view, it is preferable to use NaOH. The NaOH can also effectively remove the SO₄ ions.

An amount of the alkali added is preferably from 1.0 to 1.5-fold mol equivalent of an amount required for neutralizing the Ni ions, the Mg ions and free acids that can be contained in the acidic solution. If the amount of the alkali added is too low, there is a concern that some of the Ni ions, the Mg ions, and the free acids will not be precipitated and removed. On the other hand, if the amount of the alkali added is too high, costs may be simply increased and an amount of residues generated may be increased, leading to deterioration of filterability. From this point of view, the amount of the alkali added is preferably 1.1-fold mol equivalent to 1.2-fold molar equivalent.

By thus adding the alkali to the acidic solution, the pH of the acidic solution after the addition of the alkali is preferably from 12.0 to 13.0. If the pH of the acidic solution after the addition of the alkali is too low, the removal of Ni and Mg as components to be removed may be insufficient, which may cause deterioration of the quality of lithium carbonate. On the other hand, if the pH of the acidic solution after the addition of alkali is too high, amphoteric metals may be redissolved when the solution contains the amphoteric metals as impurities.

Here, in the removal of Ni contained in the acidic solution, when the acidic solution does not contain the Mg ions, the pH of the acidic solution after the addition of the alkali can be from 9.0 to 10.5, preferably from 10.0 to 10.5, in order to remove the Ni ions effectively.

On the other hand, when the acidic solution contains the Mg ions, Mg is also precipitated by adjusting the pH of the acidic solution after addition of the alkali to 12.0 to 13.0, and the Mg can also be removed together with Ni. From this point of view, the pH of the acidic solution after the addition of the alkali is more preferably from 12.0 to 13.0, and even more preferably from 12.0 to 12.5.

After the addition of the alkali to the acidic solution, the acidic solution can be agitated for a predetermined period of time to facilitate the reaction. From the viewpoint of improving a reaction efficiency, it is preferable that a relatively strong stirring is carried out at a relatively high temperature.

After precipitating Ni and Mg as given compounds such as hydroxides by the addition of the alkali, solid-liquid separation can be carried out using a known device or method such as a filter press or a thickener to separate a precipitate and a neutralized solution. The precipitate contains compounds of Ni and Mg. On the other hand, in the neutralized solution, substantially all of Ni and Mg are removed, and Li exists in a dissolved state.

The Ni concentration in the neutralized solution is preferably 5 mg/L or less, and particularly preferably 1 mg/L or less, and the Mg concentration is preferably 5 mg/L or less, and particularly preferably 1 mg/L or less. It is preferable to remove Ni and Mg as much as possible in the neutralization step.

### (Carbonization Step)

The neutralized solution obtained by removing nickel in the above neutralization step is subjected to a carbonization step to carbonize Li contained in the neutralized solution to obtain crude lithium carbonate once, which has lower quality than that of lithium carbonate that will be finally obtained. That is, the lithium carbonate having lower purity than that of the lithium carbonate to be finally produced corresponds to the crude lithium carbonate.

Here, in order to carbonize Li in the neutralized solution, the Li ions in the neutralized solution are recovered as crude lithium carbonate by adding a carbonate salt to the neutralized solution or blowing a carbon dioxide gas into the neutralized solution. From the viewpoint of preventing an increase of impurities, it is preferable to blow the carbon dioxide gas, because the addition of the carbonate salt results in the addition of impurity components.

When the carbonate salt is added to the neutralized solution, examples of the carbonate salt include sodium carbonate and the like. Specifically, for example, in an assumed reaction: Li₂SO₄ + Na₂CO₃ → Li₂CO₃ + Na₂SO₄, the carbonate salt having from 1.0 to 2.0-fold mol equivalent, preferably from 1.0 to 1.2-fold mol equivalent can be added based on Li in the neutralized solution. If the amount of the carbonate salt added is too low, there is a concern that Li in the neutralized solution cannot be converted to lithium carbonate to lose it. On the other hand, if it is too high, an amount of sodium sulfate mixed in lithium carbonate will increase, which requires any enhanced washing in the subsequent step, so that an increased loss of Li solved in a washing solution may be caused.

After the addition of the carbonate salt or the blowing of the carbon dioxide gas, for example, the solution may be agitated as needed at a temperature in a range of from 50 °C to 90 °C, and maintained at this temperature for 0.5 to 2.0 hours, typically 1.0 hour.

The crude lithium carbonate obtained in the above carbonization step may optionally be washed. Here, an object of the washing step is to remove mainly at least a part of SO₄ and further at least a part of Na, among impurities contained in the crude lithium carbonate. In particular, at this stage, as the quality of SO₄ contained in the crude lithium carbonate is decreased, the quality of SO₄ of lithium carbonate finally obtained through a dissolution step and a decarbonization step as described later can be significantly reduced, which is effective.

More specifically, the crude lithium carbonate can be subjected to repulping with washing water such as pure water which is 0.5 to 2 times, preferably 1.0 to 1.5 times a wet weight of the crude lithium carbonate. If the amount of pure water used for washing is too high, there is a concern about loss of Li due to the higher solubility of the crude lithium carbonate. On the other hand, if the amount of pure water is too low, it is considered that SO₄ cannot be removed as expected. As used herein, the wet weight means a weight (kg-wet) of undried lithium carbonate recovered by solid-liquid separation after carbonization.

As used herein, the repulping means that a cake obtained after solid-liquid separation is introduced into a predetermined amount of water, and then agitated and formed into a slurry, and subjected to the solid-liquid separation operation again. Further, the pure water means water that does not contain at least Mg, preferably further Na and Ca.

A temperature at the time of washing is preferably from 50 °C to 90 °C, and a washing time is preferably from 0.5 hour to 1 hour. It is considered that if the temperature is beyond this range, the solubility of lithium carbonate will increase and the dissolution loss will increase on the lower temperature side, and impurities will be reconcentrated due to volatilization of water on the higher temperature side, which are inconvenient. Also, if the time is beyond that range, there are possibilities that washing with water will be insufficient on the shorter time side and costs will increase on the longer time side.

It is preferable that the washing operation as described above is carried out a plurality of times. This is because when the washing operation is carried out once and the amount of pure water with respect to the wet weight as described above is increased, the loss of Li in the washing water is increased when reducing the predetermined SO₄ quality to a certain level, due to the higher solubility of the crude lithium carbonate. From this point of view, the number of washing operations is preferably 2 to 3, and particularly preferably 2. If the number of washing operations is too large, the dissolution loss of Li in the washing water will be increased.

### (Dissolution Step)

The crude lithium carbonate is subjected to a dissolution step of dissolving the crude lithium carbonate in a liquid while feeding a carbon dioxide gas.

More specifically, for example, the crude lithium carbonate can first be repulped with a liquid such as pure water. The carbon dioxide gas is then blown into the liquid to feed it, and carbonic acid is dissolved in the liquid. As a result, the crude lithium carbonate is dissolved in the liquid by the reaction: Li₂CO₃ + H₂CO₃ → 2LiHCO₃ to provide a Li dissolved solution as a lithium hydrogen carbonate solution. As used herein, the word "repulped" means that a cake obtained after solid-liquid separation is introduced into a predetermined amount of water and then agitated to form a slurry.

Here, in this embodiment, when the crude lithium carbonate is dissolved in the liquid, a liquid 2 as a slurry mixed with the crude lithium carbonate is stored in a reaction vessel 1 as shown in FIG. 2. The liquid 2 is then agitated with an agitator 3.

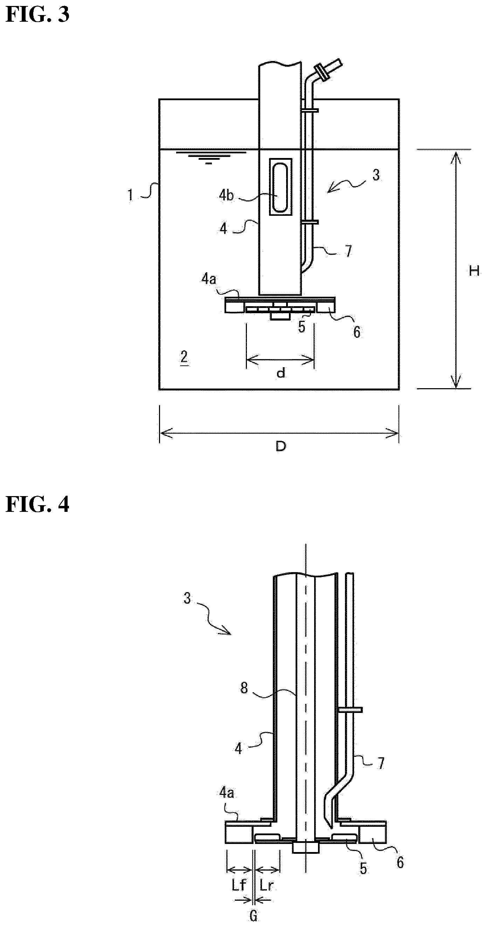

As shown in FIGS. 3 and 4, the agitator 3 includes: a cylindrical body 4 arranged upright in a reaction vessel 1; a plurality of rotary blades 5 placed at one end side of the cylindrical body 4 (a lower end side in FIGS. 3 and 4); a plurality of fixed blades 6 fixed and arranged at one end side of the cylindrical body 4 on an a radially outer side of the rotary blades 5; and a gas feed pipe 7 for feeding a gas to the rotary blades 5 and the fixed blades 6.

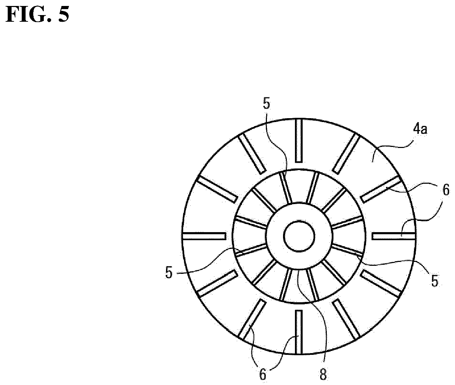

Here, the rotary blades 5 are attached to one end side of the cylindrical body 4 on a rotating shaft 8 that extends in an axial direction inside the cylindrical body 4. The rotary blades 5 are driven to rotate around the rotation axis shown as the dashed line in FIG. 4 by means of a rotation drive mechanism (not shown) arranged at the other end (an upper end in FIGS. 3 and 4) of the cylindrical body 4. In the agitator 3, a plurality of flat rotor blades 5, which are arranged upright along the rotation axis, are provided at intervals equal to each other in the form extending radially outward from the rotation axis, as shown in FIG. 5.

Here, each of the fixed blades 6 is fixed upright on a disk-shaped portion 4a provided at one end of the cylindrical body 4, for example, and is a flat plate extending in the radial direction. The plurality of fixed blades 6 arranged at intervals equal to each other are provided at a position slightly outward in the radial direction from the rotary blades 5 so as to surround the rotary blades 5. The fixed blades 6 can be provided at positions having the same height as that of the rotary blades 5 in the axial direction.

A Gap G between the fixed blade 6 and the rotary blade 5 can be from about 30 mm to 50 mm, as measured along the radial direction. For example, the number of fixed blades 6 can be from 10 to 14 and the number of rotary blades 5 can be from 10 to 14, although not limited thereto.

A ratio of a fixed blade length Lf to the gap G (fixed blade length Lf: gap G) may preferably be from 30:1 to 20:1. A ratio of a rotary blade length Lr to the gap G (rotary blade length Lr: gap G) may preferably be from 30:1 to 20:1. This can allow the gas to be efficiently made fine, and the reaction efficiency of the gas to be increased.

Further, the gas feed pipe 7 extends inside the cylindrical body 4 on the way to one end side of the cylindrical body 4, and terminates in front of the rotary blades 5 and the fixed blades 6.

In the agitator 3, a carbon dioxide gas fed through the gas feed pipe 7 is fed toward the rotary blades 5 and the fixed blades 6, and is sheared between the rotary blades 5 and the fixed blades 6 to form fine bubbles in the liquid 2. As a result, the above-mentioned reaction of the carbon dioxide in the fine bubbles with the crude lithium carbonate is accelerated, so that the reaction efficiency of the carbon dioxide gas can be significantly increased as compared with the case where other agitators such as simple propellers are used. Furthermore, this can allow any loss of lithium due to the generation of undissolved lithium crude carbonate to be minimized, and the reaction time to be shortened.

As shown in FIG. 3, the agitator 3 is provided with a through hole 4b in the cylindrical body 4, for connecting the inside with the outside of the cylindrical body 4. The liquid 2 flows into the inside of the cylindrical body 4 through the through hole 4b which is positioned below the liquid surface, and flows out of the cylindrical body 4 through the opening on one end side of the cylindrical body 4 provided with the rotary blades 5, and circulates inside and outside the cylindrical body 4.

As viewed in a direction orthogonal to the rotation axis of rotary blades 5 of the agitator 3 (the left-right direction in FIG. 3), a ratio of a diameter (d) of the rotary blades 5 to an inner diameter (D) of the reaction vessel 1 having a cylindrical shape or the like (d/D) is from 0.2 to 0.5. The diameter (d) of the rotary blades 5 refers to a length of a line segment that passes through the center of rotation of the rotary blades 5 and connects end points to each other, which end points are on the outermost position in the radial direction of the rotary blades 5 across the center of rotation.

As a result, the carbon dioxide gas is dispersed in the liquid 2 and a bubble diameter of the carbon dioxide gas becomes finer, resulting in a decreased residence time of the carbon dioxide gas in the liquid 2, an increased contact area and the like, which can significantly increase an efficiency of reaction of the crude lithium carbonate with the carbon dioxide gas. If the ratio (d/D) of the diameter (d) of the rotary blades 5 to the inner diameter (D) of the reaction vessel 1 is too low, there is a concern that a power required for increasing the reaction efficiency will increase. On the other hand, if the ratio (d/D) is too high, it may be difficult to control the system when trying to reduce the bubble diameter of the carbon dioxide gas in order to increase the reaction efficiency. From this point of view, the ratio (d/D) of the diameter (d) of the rotary blades 5 to the inner diameter (D) of the reaction vessel 1 is more preferably from 0.2 to 0.5, and even more preferably from 0.3 to 0.4.

From the viewpoint of effectively making the bubbles of the carbon dioxide gas in the liquid 2 finer, the agitator 3 preferably has turbine-type rotary blades 5 having a larger shearing capacity. Although not shown, the turbine-type rotary blades 5 include stationary blades for rectifying a fluid and moving blades for compressing the fluid or converting an energy of the fluid to rotational motion.

Further, it is preferable that a ratio (P/V) of a stirring power (P) of the agitator 3 to a volume (V) of the liquid 2 with the crude lithium carbonate introduced may be 0.3 kW/m³ or more. However, if this ratio (P/V) is too high, operating costs may increase, and if it is too low, the reaction efficiency may decrease. Therefore, the above ratio (P/V) is particularly preferably from 0.3 kW/m³ to 1.0 kW/m³, and even more preferably 0.5 kW/m³ to 0.8 kW/m³. Here, the stirring power (P) is calculated by the equation: P = Np × n³ × d⁵ from the number of power (Np), the number of rotations (n) of the agitator 3 and the diameter (d) of the rotary blades 5. Among them, the number of power (Np) is a value inherent in a blade shape of the rotary blades 5. For the cylindrical reaction vessel 1, the volume (V) of the liquid 2 can be calculated by the equation: V = (D / 2)² × π × H from the inner diameter (D) of the reaction vessel 1 and a height (H) of the liquid 2 in the reaction vessel 1.

Further, a peripheral speed of the rotary blades 5 of the agitator 3 is more preferably from 1.3 m/s to 1.9 m/s, and even more preferably from 1.4 m/s to 1.8 m/s. This is because if the peripheral speed is slower, the reaction efficiency may decrease, and if the peripheral speed is higher, the operating costs may increase. The peripheral speed means a blade tip speed (m / s) = π (pi) x diameter (m) of rotary blades x rotation speed (s⁻¹).

By stirring with the agitator 3 as described above, the reaction efficiency of the carbon dioxide gas can be effectively increased. Therefore, in this embodiment, it is not necessary to use any ion exchange resin or the like for suppressing the impurity quality. As a result, a cost required for using the ion exchange resin or the like can be reduced. However, an ion exchange resin can also be used as needed.

Further, for example, even if the reaction vessel 1 in the form of an open-type container having an open upper end or the like is used, the stirring as described above can allow the reaction efficiency of the carbon dioxide gas to be efficiently increased. Therefore, it is preferable to use the reaction vessel 1 in the form of the open-type container in place of a closed-type container, in terms of reduced equipment costs.

When such an open-type container shaped reaction vessel 1 is used or the like, an increased rate of the carbon dioxide gas fed to the liquid 2 in the reaction vessel 1 may lead to an increased amount of unreacted carbon dioxide gas leaking to the outside of the reaction vessel 1.

In order to prevent this, the rate of the carbon dioxide gas fed to the liquid 2 in the reaction vessel 1 is preferably 0.6 L/min/L or less, and more preferably 0.4 L/min/L or less. This can allow a rate of the carbon dioxide gas dissolved in the liquid 2 to be made close to a rate of the crude lithium carbonate dissolved, thereby effectively preventing the unreacted gas to leak out. On the other hand, if the rate of the carbon dioxide fed is too slow, the reaction efficiency will reach a plateau, while the power costs will increase, and relative costs may increase. Therefore, the rate of the carbon dioxide gas fed to the liquid 2 can be, for example, 0.2 L/min/L or more, and preferably 0.3 L/min/L or more.

Although not shown, the carbon dioxide gas can be fed so as to be sprayed onto the rotary blades 5 and the fixed blades 6 of the reaction vessel 1 through the gas feed pipe 7, for example, as shown in FIG. 4, and in this case, the carbon dioxide gas rises upward while being agitated in the liquid 2 and reacting. This can allow the bubbles of the carbon dioxide gas to be crushed in spaces between the rotary blades 5 and the fixed blades 6, thereby providing a more finer bubble diameter.

A slurry concentration in an initial stage of a reaction before dissolving the crude lithium carbonate in the liquid 2 is preferably from 20 g/L to 90 g/L. If the slurry concentration is too high, lithium loss may occur even if the agitator 3 described above is used. On the other hand, if the slurry concentration is too low, the concentration of lithium in the dissolved solution will be decreased, which may increase the cost of concentration during crystallization in the subsequent step. The slurry concentration in the initial stage of the reaction may be about 70 g/L.

The slurry concentration at the end of the reaction is preferably from 1 g/L to 10 g/L. Typically, the slurry concentration at the end of the reaction may be about 2 g/L.

When repulping the crude lithium carbonate before dissolution, pure water is preferably used in an amount that a Li concentration is from 7 g/L to 9 g/L, assuming that the total amount of the crude lithium carbonate is dissolved in the pure water at 25 °C. The Li concentration is in a range close to the solubility as lithium hydrogen carbonate and varies depending on temperatures. Therefore, it is desirable to appropriately adjust the Li concentration in the range according to the temperature during repulping. More preferably, pure water is used in such an amount that the Li concentration is from 8 g/L to 9 g/L, assuming that the total amount of the crude lithium carbonate is dissolved in the pure water at 25 °C.

When the carbon dioxide gas is blown into the pure water after repulping, 1.0-fold mol equivalent to 3.0-fold mol equivalent, particularly 1.3-fold mol equivalent to 2.0-fold mol equivalent, of carbon dioxide gas, is preferably blown, in the above assumed reaction. If an amount of the carbon dioxide gas is too high, there is a concern that Ca as a component to be removed may be dissolved, and if it is too low, the dissolution of lithium carbonate may be insufficient, resulting in a loss of lithium as a component to be recovered. In this embodiment, the amount of the carbon dioxide gas used can be reduced by stirring as described above, so that the production costs can be effectively reduced.

An end point of reaction can be controlled by the pH. Specifically, the blowing of the carbon dioxide gas can be stopped at the time when the pH reaches, for example, 7.6 to 7.9, and particularly preferably 7.6 to 7.7. This can allow Ca to be separated leaving it as a residue. Here, this utilizes the property that the solubility of calcium sulfate is sufficiently lower than that of calcium carbonate and calcium hydrogen carbonate.

### (Decarbonization Step)

After the dissolution step, the Li dissolved solution obtained in that step is heated to release carbonic acid, and Li ions in the Li dissolved solution are precipitated as lithium carbonate.

Here, the Li dissolved solution can be concentrated by heating it to a temperature of preferably from 50 °C to 90 °C, and the carbonic acid can be released from the Li dissolved solution as a carbon dioxide gas. The solubility of lithium hydrogen carbonate is decreased as the temperature is increased. In the decarbonization step, a difference in the solubility between lithium hydrogen carbonate and lithium carbonate can be used to effectively crystallize Li, which is sufficiently dissolved in the Li dissolved solution due to the production of lithium hydrogen carbonate as lithium carbonate by heating.

If the heating temperature of the Li dissolved solution is less than 50 °C, there is a concern that carbonic acid will not be effectively released. On the other hand, if the heating temperature is more than 90 °C, a defect due to boiling may occur, so that the upper limit can be 90 °C. From this point of view, the heating temperature of the lithium dissolved solution is more preferably from 70 °C to 80 °C.

In this case, the solution can be heated and concentrated about 3 times in a volume ratio. However, even if it is heated and concentrated until it evaporates to dryness, a recovery rate of Li can be improved without significantly affecting the impurity quality.

Lithium carbonate having relatively high quality can be obtained by the decarbonization step.

After the decarbonization step, lithium carbonate may be washed depending on the impurity quality of lithium carbonate and other conditions. However, this washing after the decarbonization step may be omitted.

The washing can be carried out under the same conditions and methods as those of the washing step before the dissolution step. This may allow impurities derived from attached water that may be contained in lithium carbonate, for example, SO₄, and further Na to be removed. An increased amount of washing water in this washing step may not improve the impurity quality of soluble components, in which case such impurities may be trapped in the crystals at the stage of the decarbonization step.

When a concentration ratio during heating in the decarbonization step is higher, it is preferable to carry out the washing step in terms of further removing impurities.

### (Lithium Carbonate)

The lithium carbonate obtained as described above preferably has a purity of lithium carbonate of preferably 99.2% by mass or more, and more preferably 99.5% by mass or more.

In particular, the production of lithium carbonate by the above production method can allow the content of sodium in lithium carbonate to be 100 ppm by mass or less. Sodium may interfere with the movement of the lithium ions, for example, when the lithium carbonate is used in the production of a lithium ion battery. Therefore, it is effective that the concentration of sodium can be reduced in such a manner. The sodium content of lithium carbonate can be further 80 ppm by mass or less and 50 ppm by mass or less.

Further, according to the production method using the lithium ion battery waste as a raw material as described above, the chlorine content of lithium carbonate can be 10 ppm by mass or less. Since chlorine is compounded with a lithium compound in the lithium ion battery and has a moisture absorbing property, it is preferable that the chlorine content is lower. In general, lithium carbonate is often produced from seawater. The lithium carbonate produced from seawater is difficult to reduce the chlorine content as described above.

It should be noted that the contents and purities of sodium and chlorine as stated above are measured by ion chromatography with an automatic sample combustion device.

Such lithium carbonate can be used for various applications, and in particular, it can be effectively used for the production of lithium ion batteries.

### EXAMPLES

Next, the method for producing lithium carbonate as described above was experimentally carried out and its effects were confirmed as described below. However, the descriptions herein are merely for the purpose of illustration and are not intended to be limited thereto.

After repulping crude lithium carbonate with pure water, a carbon dioxide gas was blown into the solution to redissolve the carbon dioxide gas as a lithium hydrogen carbonate solution. For the agitation, an agitator that simply rotated the propeller blades was used in Comparative Examples, whereas an agitator having rotary blades and fixed blades as shown in FIGS. 3-5 (trade name: Microagitor, from Shimazaki Mixing Engineering Co., Ltd.) was used in Examples.

The end point of the reaction was set at pH 7.7, and the carbon dioxide gas was fed so that the reaction efficiency of the carbon dioxide reaction was at the maximum of the theoretical equivalents. The reaction was carried out at room temperature (25 °C) and under atmospheric pressure. The results are shown in Table 1 together with various conditions.

**[Table 1]**

| Agitator | Volume (L) | Vessel Diameter (m) | Blade Diameter (m) | Rotation Speed (rpm) | Gas Flow Rate (L/min) | Carbon Dioxide Gas Amount (eq.) | Li Loss Percentage (% vs. Li Carbonate) |
|---|---|---|---|---|---|---|---|
| Propeller | 150 | 0.8 | 0.16 | 850 | 30 | 1.0 | 11.2 |
| | | | | | 50 | 1.5 | 12.3 |
| Microagitor | | | | 600 | 30 | 1.0 | 2.5 |
| | | | | | 40 | 1.0 | 2.5 |
| | | | | 850 | 30 | 1.0 | 2.5 |
| | | | | | 50 | 1.0 | 6.3 |

As can be seen from Table 1, it is found that in Examples using the agitator shown in FIGS. 3-5, any undissolved lithium crude carbonate is decreased and the Li loss percentage is effectively reduced as compared with Comparative Examples using the propeller.

### Description of Reference Numerals

- 1: reaction vessel
- 2: liquid
- 3: agitator
- 4: cylindrical body
- 4a: disc-shaped portion
- 4b: through hole
- 5: rotary blade
- 6: fixed blade
- 7: gas feed pipe
- 8: rotation axis
- d: diameter of rotary blade
- D: inner diameter of reaction vessel
- H: height of liquid in reaction vessel

## Claims

1. A method for producing lithium carbonate, comprises:
a dissolution step of dissolving crude lithium carbonate in a liquid while feeding a carbon dioxide gas; a decarbonization step of heating a lithium dissolved solution obtained in the dissolution step to release carbonic acid,
wherein the dissolution step comprises storing the liquid mixed with the crude lithium carbonate in a reaction vessel, and agitating the liquid using an agitator, and
wherein the agitator comprises: a cylindrical body arranged upright in the reaction vessel; a plurality of rotary blades placed at one end side of the cylindrical body, the rotary blades driven to rotate around a rotation axis, and extending in a radial direction; a plurality of fixed blades fixed and arranged at the one end side of the cylinder body on a radially outer side of the rotary blades, each of the fixed blades extending in the radial direction; and a gas feed pipe for feeding a gas toward the rotary blades and the fixed blades.

2. The method for producing lithium carbonate according to claim 1, wherein a slurry concentration before dissolving the crude lithium carbonate in the liquid in the dissolution step is from 20 g/L to 90 g/L.
